# EUROPÄISCHE PATENTSCHRIFT

(11) **EP 2 857 166 B1**
(45) Veröffentlichungstag und Bekanntmachung des Hinweises auf die Patenterteilung: **27.05.2020**
(21) Anmeldenummer: 14185371.3
(22) Anmeldetag: 18.09.2014
(51) Int. Cl.: B29C 33/10, B29C 44/44, B29C 44/58

(54) **Form**
Mould
Moule

(30) Priorität: 07.10.2013 DE 102013111078
(43) Veröffentlichungstag der Anmeldung: 08.04.2015
(60) Teilanmeldung: 18203761.4
(73) Patentinhaber: Thorsten, Michel, 56355 Lautert (DE)
(72) Erfinder: Thorsten, Michel, 56355 Lautert (DE)
(74) Vertreter: dompatent von Kreisler Selting Werner - Partnerschaft von Patent- und Rechtsanwälten mbB

(56) Entgegenhaltungen:
- DE-T5-112011 102 871
- GB-A- 732 287
- JP-A- H06 320 634
- JP-A- H07 108 346
- JP-U- H0 585 609

## Beschreibung

Die Erfindung bezieht sich auf eine zwei- oder mehrteilige, einen Formhohlraum aufweisende Form zur Herstellung von Formkörpern aus geschäumtem Kunststoff aus in der Form expandierten Kunststoffteilchen, mit einer Füllvorrichtung zum Füllen des Formhohlraums über eine Füllöffnung mit den Kunststoffteilchen aus thermoplastischem Kunststoff und mit einer oder mehreren Öffnungen, wobei die Oberfläche der den Formhohlraum bildenden Wände mit Vertiefungen versehen ist, die in die wenigstens eine nach außen führende Öffnung münden.

Bei derartigen Formen wird der Formhohlraum über die Füllöffnung mit expandierendem Granulat aus einem Kunststoff gefüllt. Durch Bedampfungsöffnungen wird nun Dampf in den Formhohlraum eingelassen, durch den das Granulat zu einem Formkörper expandiert oder verschweißt, der den Formhohlraum vollständig ausfüllt und dessen Oberfläche offenporig ausgebildet ist. Dabei können die in dem Formhohlraum vorhandene Luft und Dampf durch die nach außen führenden Öffnungen nach außen strömen.

Bei weiteren derartigen Formen wird der Formhohlraum über die Füllöffnung mit expandierendem Granulat aus einem Kunststoff gefüllt. Durch elektrische Energie (Ultraschall, Mikrowelle, Heizstäbe oder mit Öl oder Wasser gefüllte Heizschlangen) im Werkzeug wird das Granulat erhitzt und zu einem Formkörper expandiert oder verschweißt, der den Formhohlraum vollständig ausfüllt und dessen Oberfläche offenporig ausgebildet ist. Dabei kann die in dem Formhohlraum vorhandene Luft durch die nach außen führenden Öffnungen nach außen strömen.

Das Dokument DE-T5-11201/102871 offenbart eine Form gemäß dem Oberbegriff des Anspruchs 1.

Aufgabe der Erfindung ist es eine Form der eingangs genannten Art zu schaffen, die einfach aufgebaut ist und durch die die Oberfläche des Formkörpers zumindest weitgehend nichtoffenporig ausgebildet ist.

Diese Aufgabe wird erfindungsgemäß durch die Merkmale des Anspruchs 1 gelöst. Die Oberfläche ist ganz oder teilweise mit einer Oberflächenstruktur versehen, die Kanäle bildet, wobei die Abstände zwischen den Kanälen zwischen < 8 mm und > 0,01 mm sind und wobei die Kanäle direkt oder indirekt zur Füllöffnung und/oder zu einer oder mehreren der nach außen führenden Öffnungen führen.

Durch diese Ausbildung können zumindest weitgehend keine Luftreste in Zwickelvolumina der Kunststoffteilchen verbleiben, die zu der Offenporigkeit der Oberfläche des Formkörpers führen würden. An der Oberfläche des Formkörpers sind abhängig von der Feinheit der Abstände der Kanäle zueinander nur noch geringe bis gar keine Poren mehr zu erkennen.

Dies ermöglicht es Oberflächen der Formkörper von feiner Ästhetik zu schaffen.

Dabei entsprechen vorzugsweise die Abstände zwischen den Kanälen annähernd zwischen dem 0,01-fachen und dem 3-fachen der durchschnittlichen Größe der expandierten Kunststoffteilchen.

Zur guten Entlüftung und Vermeidung einer Porenbildung kann die Tiefe der Kanäle annähernd zwischen > 0,02 mm und < 3 mm. Die Breite der Kanäle ist zwischen > 0,01 mm und < 2,5 mm.

Um eine gute Entlüftung zu erreichen, können über die ganze Fläche, an der eine Porenbildung vermieden werden soll, die Kanäle annähernd parallel zueinander verlaufen.

Zu einer noch weiter verbesserten Entlüftung und Porenvermeidung führt es, wenn die Kanäle eine Gitterstruktur bilden.

Die Kanäle können einen regelmäßigen aber auch einen unregelmäßigen Längsverlauf aufweisen.

Auch können die Kanäle anstatt einer regelmäßigen eine unregelmäßige Breite aufweisen.

Die Kanäle sind die Zwischenräume zwischen einer Vielzahl unregelmäßig verteilter Erhebungen an der Oberfläche der den Formholraum bildenden Wände. Somit sind sie einfach herstellbar.

Dabei können die Zwischenräume eine Maserung oder unregelmäßige Struktur bilden.

Diese Zwischenräume sind z.B. durch Laserbeaufschlagung kostengünstig zu erzeugen.

Ein Ausführungsbeispiel der Erfindung ist in der Zeichnung dargestellt und wird im folgenden näher beschrieben. Es zeigen
- Figur 1: eine Form im Querschnitt
- Figur 2: einen Ausschnitt einer Wand eines Formhohlraums einer Form nach dem Stand der Technik mit expandierten Kunststoffteilchen
- Figur 3: eine Ansicht auf einen Formkörper nach dem Stand der Technik
- Figur 4: einen Ausschnitt einer Wand des Formhohlraums der Form nach Figur 1 mit expandierten Kunststoffteilchen
- Figur 5: eine Ansicht auf einen in der Form nach Figur 1 erzeugten Formkörper
- Figur 6: eine Ansicht auf einen in einer weiteren erfindungsgemäßen Form erzeugten Formkörper
- Figur 7: eine Ansicht auf einen in einer erfindungsgemäßen Form erzeugten Formkörper
- Figur 8: eine Ansicht auf einen in einer weiteren erfindungsgemäßen Form erzeugten Formkörper.

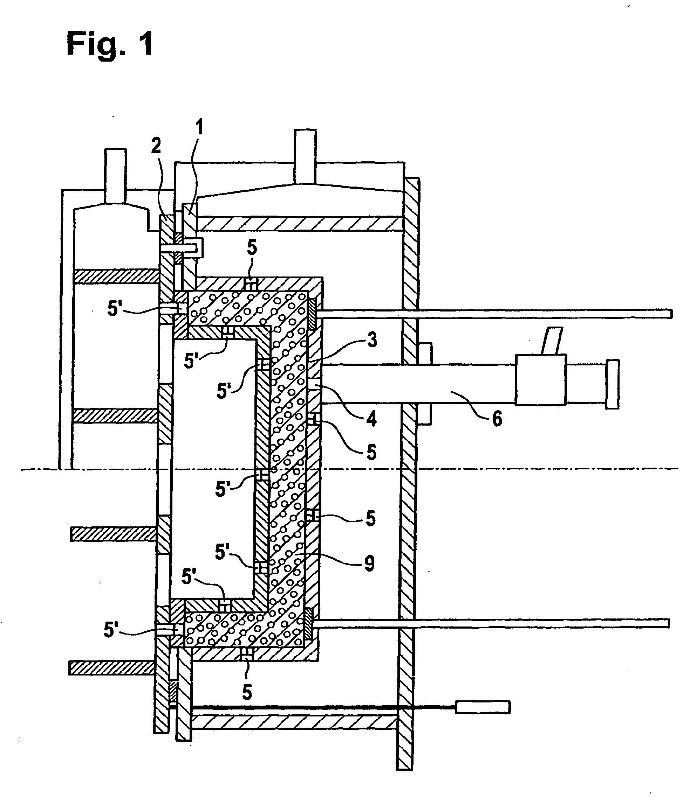

Die in Figur 1 dargestellte Form weist eine erstes Formteil 1 und ein zweites Formteil 2 auf, die sich im geschlossenen Zustand der Form befinden. Sie bilden zwischen sich einen Formhohlraum 3, der mit einem Formkörper 9 aus einem geschäumten Kunststoff ausgefüllt ist. Das erste Formteil 1 weist mittig eine Füllöffnung 4 auf, über die mittels eines Füllinjektors 6 Kunststoffteilchen aus einem thermoplastischen Kunststoff in den Formhohlraum einfüllbar sind.

Weiterhin weist das erste Formteil 1 zwei zweitere von außen in den Formhohlraum 3 führende Öffnungen auf.

Das zweite Fromteil 2 ist ebenfalls mit von außen zu dem Formhohlraum 3 führenden Öffnungen 5' versehen.

Über die Öffnungen 5, 5' wird die geschlossene Form zunächst über den Füllinjektor 6 mit expandierbaren Kunststoffteilchen aus thermoplastischem Kunststoff wie EPS (Polystyrol), EPP (Polypropylen), EPE (Polyethylen), EPS+EPE (Piocelan), ETPU (thermoplastisches Polyurethan) oder anderen Partikelschäumen gefüllt.

Nach Schließen der Füllöffnung 4 wird nun über die Öffnungen 5, 5' Heißdampf in den Formhohlraum 3 eingeführt, wodurch die Kunststoffteilchen expandieren, bis der Formhohlraum 3 den Formkörper 9 bildend vollständig ausgefüllt ist. Dabei dienen die Öffnungen 5, 5' zum Ausströmen der in dem Formhohlraum 3 enthaltenen Luft, Dampf und kondensiertem Wasser.

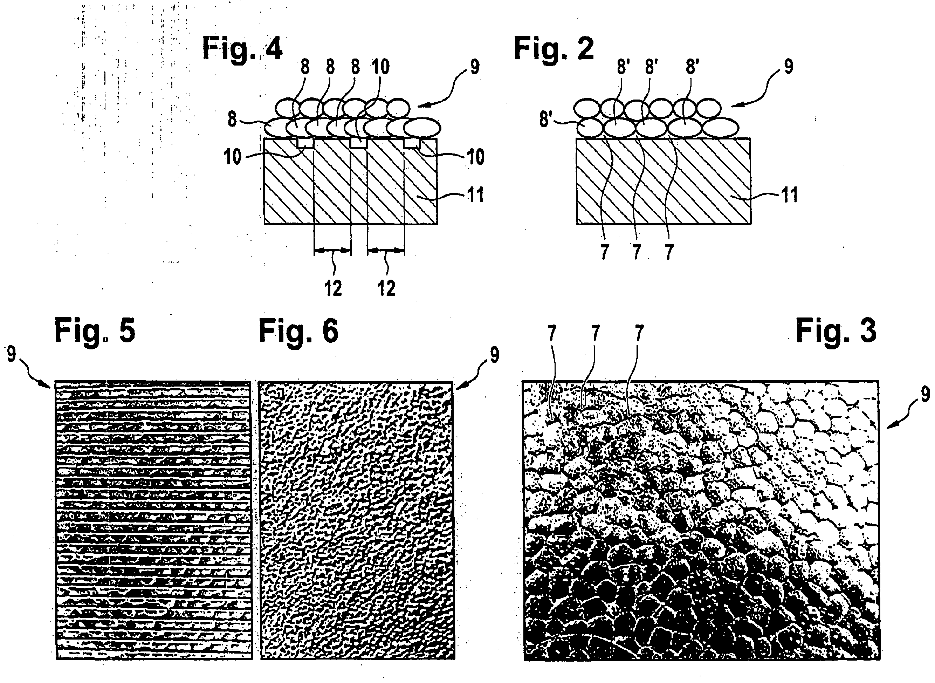

Bei einer Form nach dem Stand der Technik bilden sich zwischen der Oberfläche der den Formhohlraum 3 bildenden Wände 11 des ersten und zweiten Formteils 1, 2 und den expandierten Kunststoffteilchen 8' Zwickelvolumina 7 von Luftresten, wie in Figur 2 zu sehen ist. Diese Zwickelvolumina führen zu einer porigen Ausbildung der Oberfläche des Formkörpers 9', wie in Figur 3 zu sehen ist.

Bei der erfindungsgemäßen Form sind in der Oberfläche der den Formhohlraum 3 bildenden Wände 11 des ersten und zweiten Formteils 1, 2 Kanäle 10 ausgebildet, die Abstände 12 von <8 mm und >0,01 mm aufweisen. Diese Abstände 12 entsprechen dem 0,01-fachen bis 3-fachen der durchschnittlichen Größe der expandierten Kunststoffteilchen 8, so daß zumindest weitgehend die Luftreste, die beim Stand der Technik zu Zwickelvolumina 7 geführt haben, über die zu den Öffnungen 5, 5' führenden Kanäle 10 abgeführt werden (Siehe Figur 4). Dadurch ergeben sich je nach der Feinheit der Kanäle 10 porenlose Oberflächen des Formkörpers 9.

In den Figuren 5 und 6 sind Oberflächen von Formkörpern 9 dargestellt, die in offenbarungsgemäßen Formen hergestellt wurden. Dabei war die Wand des Formhohlraums für den Formkörper 9 in Figur 5 mit parallelen Kanälen versehen während die Wand des Formhohlraums für den Formkörper in Figur 6 eine Vielzahl an unregelmäßig verteilten Erhebungen aufwies.

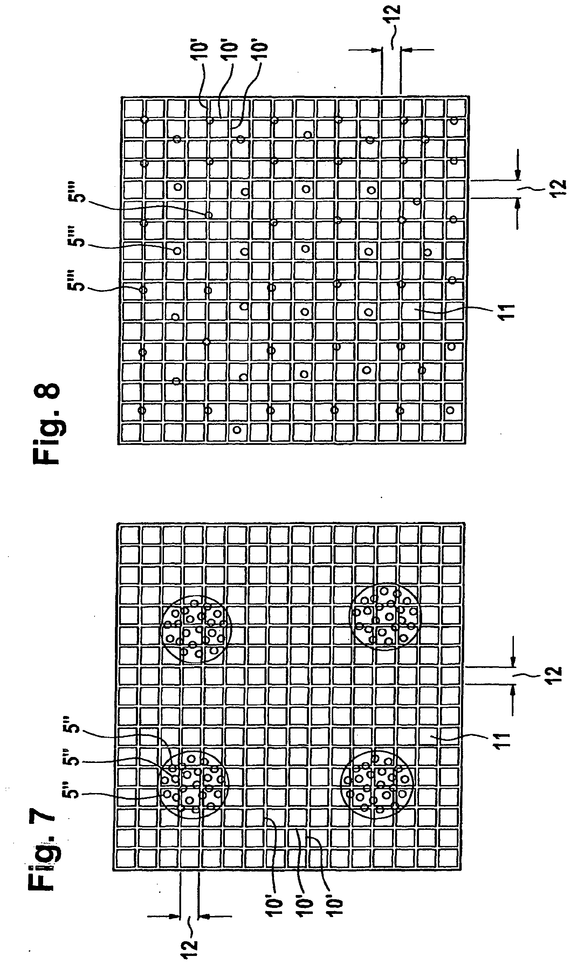

In Figur 7 ist ein Beispiel der Anordnung von Öffnungen 5" und Kanälen 10' in einer Oberfläche einer den Formhohlraum 3 bildenden Wand 11 dargestellt. Dabei sind die Öffnungen 5" in vier kreisförmigen Gruppen angeordnet. Die Kanäle 10' erstrecken sich in einer gleichmäßigen Gitterstruktur aus parallel zueinander verlaufenden ersten Kanälen 10' und rechtwinklig dazu verlaufenden, die ersten Kanäle 10' kreuzenden zweiten Kanälen 10'. Durch die Gitterstruktur sind alle Kanäle 10' mit Öffnungen 5" schneidenden Kanälen 10' verbunden. Die geringen Abstände 12 zwischen den Kanälen 10' führen dazu, daß zumindest weitgehend keine Luftreste zwischen den expandierten Kunststoffteilchen 8' und der Wand 11 des Formhohlraums 3 verbleiben.

Bei dem Beispiel der Figur 8 sind die Kanäle 10' in gleicher Weise wie in Figur 7 angeordnet. Sie kreuzen direkt oder indirekt über die Fläche der Wand 11 des Formhohlraums verteilt angeordnete Öffnungen 5'''. Auch hier führen die geringen Abstände 12 zwischen den Kanälen 10' dazu, daß zumindest weitgehend keine Luftreste zwischen den expandierten Kunststoffteilchen 8' und der Wand 11 des Formhohlraums 3 verbleiben.

### Bezugszeichenliste

- 1: erstes Formteil
- 2: zweites Formteil
- 3: Formhohlraum
- 4: Füllöffnung
- 5: Öffnungen
- 5': Öffnungen
- 5": Öffnungen
- 6: Füllinjektor
- 7: Zwickelvolumina
- 8: expandierte Kunststoffteilchen
- 8': expandierte Kunststoffteilchen
- 9: Formkörper
- 10: Kanäle
- 10': Kanäle
- 11: Wand
- 12: Abstände

## Patentansprüche

1. Zwei- oder mehrteilige, einen Formhohlraum (3) aufweisende Form zur Herstellung von Formkörpern (9) aus geschäumtem Kunststoff aus in der Form expandierten Kunststoffteilchen, mit einer Füllvorrichtung zum Füllen des Formhohlraums (3) über eine Füllöffnung (4) mit den Kunststoffteilchen aus thermoplastischem Kunststoff und mit einer oder mehreren Öffnungen (5, 5', 5", 5"'), wobei die Oberfläche der den Formhohlraum (3) bildenden Wände (11) mit Vertiefungen versehen ist, die in die wenigstens eine nach außen führende Öffnung (5, 5', 5", 5"') münden, wobei zur Entlüftung des Formhohlraums die Oberfläche ganz oder teilweise mit einer Oberflächenstruktur versehen ist, die Kanäle (10, 10') bildet, wobei die Abstände (12) zwischen den Kanälen (10, 10') zwischen < 8 mm und > 0,01 mm sind und wobei die Kanäle (10, 10') direkt oder indirekt zur Füllöffnung und/oder zu einer oder mehreren der nach außen führenden Öffnungen (5, 5', 5", 5"') führen und wobei die Breite der Kanäle (10, 10')zwischen > 0,01 mm und < 2,5 mm ist **dadurch gekennzeichnet, daß** die Kanäle die Zwischenräume zwischen einer Vielzahl unregelmäßig verteilter durch laserbeaufschlagung erzeugter Erhebungen an der Oberfläche der den Formhohlraum bildenden Wände sind.

2. Form nach Anspruch 1, **dadurch gekennzeichnet, daß** die Abstände (12) zwischen den Kanälen (10, 10') annähernd zwischen dem 0,01-fachen und dem 3-fachen der durchschnittlichen Größe der expandierten Kunststoffteilchen (8, 8') entsprechen.

3. Form nach einem der vorhergehenden Ansprüche, **dadurch gekennzeichnet, daß** die Tiefe der Kanäle (10, 10') annähernd zwischen > 0,02 mm und < 3 mm ist.

4. Form nach einem der vorhergehenden Ansprüche, **dadurch gekennzeichnet, daß** die Kanäle (10, 10') annähernd parallel zueinander verlaufen.

5. Form nach einem der vorhergehenden Ansprüche, **dadurch gekennzeichnet, daß** die Kanäle (10, 10') eine Gitterstruktur bilden.

6. Form nach einem der vorhergehenden Ansprüche, **dadurch gekennzeichnet, daß** die Kanäle einen unregelmäßigen Längsverlauf aufweisen.

## Claims

1. Two- or multipart mold for the production of molded bodies (9) from foamed plastic material consisting of plastic particles expanded in the mold, the mold having a mold cavity (3), a filling device for filling the mold cavity (3) with the plastic particles of thermoplastic material via a filling opening (4), and one or more openings (5, 5', 5", 5"'), wherein the surface of the walls (11) forming the mold cavity (3) is provided with recesses that open into at least one opening (5, 5', 5", 5"') leading to the outside, wherein, for the purpose of venting the mold cavity, the surface is entirely or partly provided with a surface structure forming channels (10, 10'), wherein the distances (12) between the channels (10, 10') lead directly or indirectly to the filling opening and/or one or more of the opening (5, 5', 5", 5"') leading to the outside, and wherein the width of the channels (10, 10') is between > 0.01 mm and < 2.5 mm,
**characterized in that**
the channels are the spaces between a plurality of irregularly distributed protrusions on the surface of the walls forming the mold cavity, said protrusions being formed by the application of laser radiation.

2. Mold of claim 1, **characterized in that** the distances (12) between the channels (10, 10') correspond approximately to between 0.01 times to 3 times the average size of the expanded plastic particles (8, 8').

3. Mold of one of the preceding claims, **characterized in that** the depth of the channels (10, 10') is approximately between > 0.02 mm and < 3 mm.

4. Mold of one of the preceding claims, **characterized in that** he channels (10, 10') extend approximately parallel to each other.

5. Mold of one of the preceding claims, **characterized in that** he channels (10, 10') form a grid structure.

6. Mold of one of the preceding claims, **characterized in that** he channels have an irregular lengthwise extension.

## Revendications

1. Moule en deux ou davantage de parties comprenant une cavité de moule (3) pour la fabrication de corps moulés (9) en matière synthétique moussée à partir de particules de matière synthétique expansées dans le moule, avec un dispositif de remplissage pour remplir la cavité de moule (3), via une ouverture de remplissage (4), avec les particules de matière synthétique en matière synthétique thermoplastique, et avec une ou plusieurs ouvertures (5, 5', 5", 5"'), la surface des parois (11) formant la cavité de moule (3) étant pourvue de renfoncements qui débouchent dans ladite au moins une ouverture (5, 5', 5", 5"') menant vers l'extérieur, la surface étant pourvue entièrement ou partiellement d'une structure de surface formant des canaux (10, 10') pour ventiler la cavité de moule, les distances (12) entre les canaux (10, 10') étant entre < 8 mm et > 0,01 mm et les canaux (10, 10') menant directement ou indirectement à l'ouverture de remplissage et/ou à une ou plusieurs des ouvertures (5, 5', 5", 5''') menant vers l'extérieur, et la largeur des canaux (10, 10') étant entre > 0,01 mm et < 2,5 mm, **caractérisé en ce que** les canaux sont les interstices entre une pluralité de saillies irrégulièrement réparties et réalisées par application d'un laser, sur la surface des parois formant la cavité de moule.

2. Moule selon la revendication 1, **caractérisé en ce que** les distances (12) entre les canaux (10, 10') correspondent approximativement à 0,01 à 3 fois la taille moyenne des particules de matière synthétique (8, 8') expansées.

3. Moule selon l'une des revendications précédentes, **caractérisé en ce que** la profondeur des canaux (10, 10') est approximativement entre > 0,02 mm et < 3 mm.

4. Moule selon l'une des revendications précédentes, **caractérisé en ce que** les canaux (10 10') sont approximativement parallèles les uns aux autres.

5. Moule selon l'une des revendications précédentes, **caractérisé en ce que** les canaux (10, 10') forment une structure de grille.

6. Moule selon l'une des revendications précédentes, **caractérisé en ce que** les canaux présentent une étendue longitudinale irrégulière.
